(19) Europäisches Patentamt
European Patent Office
Office européen des brevets

(11) **EP 3 087 444 B1**

(12) **FASCICULE DE BREVET EUROPEEN**

(45) Date de publication et mention de la délivrance du brevet:
**11.10.2017 Bulletin 2017/41**

(21) Numéro de dépôt: **14819020.0**

(22) Date de dépôt: **23.12.2014**

(51) Int Cl.:
*G05B 23/02* (2006.01)    *G21C 17/017* (2006.01)
*G01N 27/90* (2006.01)

(86) Numéro de dépôt international:
**PCT/EP2014/079163**

(87) Numéro de publication internationale:
**WO 2015/097221 (02.07.2015 Gazette 2015/26)**

(54) **PROCÉDÉ D'ESTIMATION QUANTITATIVE DU COLMATAGE DES PLAQUES D'UN GÉNÉRATEUR DE VAPEUR**

VERFAHREN ZUR QUANTITATIVEN BESTIMMUNG VON VERUNREINIGUNG VON DISTANZPLATTEN IN EINEM DAMPFERZEUGER

METHOD FOR QUANTITATIVE ESTIMATION OF FOULING OF THE SPACERS PLATES IN A STEAM GENERATOR

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **23.12.2013 FR 1363489**

(43) Date de publication de la demande:
**02.11.2016 Bulletin 2016/44**

(73) Titulaire: **Electricité de France**
**75008 Paris (FR)**

(72) Inventeurs:
• **RENARD, Bruno**
**75003 Paris (FR)**
• **PAUL, Nicolas**
**93100 Montreuil (FR)**

(74) Mandataire: **Regimbeau**
**87 rue de Sèze**
**69477 Lyon Cedex 06 (FR)**

(56) Documents cités:
**EP-A1- 2 474 826**

• **L. CHA^TELLIER ET AL: "TUBE SUPPORT PLATE BLOCKAGE EVALUATION WITH TELEVISUAL EXAMINATION AND EDDY CURRENT ANALYSIS", AIP CONFERENCE PROCEEDINGS, 1 janvier 2009 (2009-01-01), pages 766-773, XP055022381, DOI: 10.1063/1.3114334**

# EP 3 087 444 B1

**Description**

DOMAINE TECHNIQUE ET CONTEXTE DE L'INVENTION

La présente invention se rapporte d'une façon générale au domaine de l'inspection des tubes d'un échangeur de chaleur à tubes. Plus précisément, l'invention concerne un procédé d'évaluation du colmatage de passages d'une plaque entretoise d'un échangeur thermique à tubes, lesdits passages étant ménagés le long des tubes et servant à la circulation d'un fluide dans ledit échangeur thermique à travers ladite plaque.

Un générateur de vapeur est généralement composé d'un faisceau de tubes dans lesquels circule le fluide chaud, et autour desquels circule le fluide à chauffer. Par exemple, dans le cas d'un générateur de vapeur d'une centrale nucléaire de type REP, les générateurs de vapeur sont des échangeurs de chaleur qui utilisent l'énergie du circuit primaire issue de la réaction nucléaire pour transformer l'eau du circuit secondaire en vapeur qui alimentera la turbine et ainsi à produire de l'électricité.

Le générateur de vapeur amène le fluide secondaire d'un état d'eau liquide à l'état de vapeur juste en limite de saturation, en utilisant la chaleur de l'eau primaire. Celle-ci circule dans des tubes autour desquels circule l'eau secondaire. La sortie du générateur de vapeur est le point le plus haut en température et pression du circuit secondaire.

La surface d'échange, séparant physiquement les deux circuits, est ainsi constituée d'un faisceau tubulaire, composé de 3500 à 5600 tubes, selon le modèle, dans lesquels circule l'eau primaire portée à haute température (320°C) et haute pression (155bars).

Ces tubes du générateur de vapeur sont maintenus par des plaques entretoises disposées généralement perpendiculairement aux tubes qui les traversent.

Afin de laisser passer le fluide qui se vaporise, les passages de ces plaques entretoises sont foliés, c'est-à-dire que leur forme présente des lobes autour des tubes. Comme l'eau passe de l'état liquide à l'état vapeur, elle dépose toutes les matières qu'elle contenait. Si les dépôts de matière se font dans les lobes, ils diminuent le passage libre : c'est le colmatage, qui est donc l'obturation progressive, par des dépôts, des trous destinés au passage du mélange eau/vapeur.

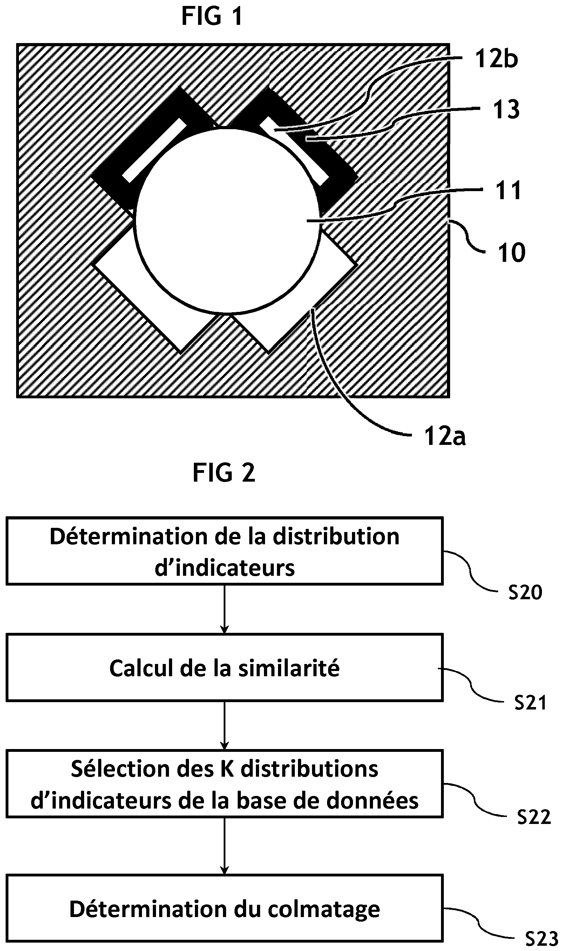

La figure 1 illustre schématiquement une vue de dessus d'un passage folié dans une plaque entretoise 10, dans lequel passe un tube 11. Les lobes 12a et 12b permettent à l'eau de traverser la plaque entretoise 10 le long du tube 11, permettant ainsi la circulation de l'eau dans le générateur de vapeur. Un dépôt 13 est visible au niveau du lobe 12b, colmatant ledit lobe 12b. Le dépôt peut se situer du côté du tube et/ou du côté de la plaque.

Le colmatage conduit à des modifications de l'écoulement de l'eau dans le générateur de vapeur, et ainsi favorise l'apparition de vibrations excessives des tubes, ainsi qu'induire des efforts mécaniques importants sur les structures internes des générateur de vapeur. Cette dégradation a donc des effets à la fois sur la sûreté et sur les performances des installations. Il est donc indispensable de bien connaître la nature et l'évolution de cette dégradation.

On cherche donc à estimer le taux de colmatage de ces passages. Ce taux de colmatage correspond au rapport entre la surface bouchée de ces passages sur la surface totale de ceux-ci. Il s'agit plus généralement de faire une évaluation quantitative de ce taux de colmatage.

Actuellement, le seul système d'examen non destructif qui soit capable d'accéder à la totalité des intersections tubes/plaques entretoises des générateurs de vapeur est la sonde axiale à courant de Foucault (sonde SAX). Les courants de Foucault apparaissent dans un matériau conducteur lorsque l'on fait varier le flux magnétique à proximité. On fait ainsi circuler dans un tube dudit échangeur une sonde à courant de Foucault multifréquence et on mesure avec celle-ci un signal de mesure fonction de l'environnement dans lequel la sonde se trouve, duquel on peut extraire des informations quant à des anomalies dans l'échangeur thermique.

Une variation de l'induction magnétique, typiquement par une bobine dans laquelle circule un courant alternatif, engendre des courants de Foucault, dont la variation induite du champ magnétique est détectée. Typiquement, on mesure la différence de tension engendrée par la variation d'impédance de la bobine.

L'exploitation des signaux de mesure de cette sonde à courant de Foucault n'induit pas d'allongement de l'arrêt du générateur de vapeur, puisque cette sonde à courant de Foucault est déjà utilisée lors des arrêts de tranche, notamment pour inspecter l'intégrité des tubes du générateur de vapeur.

Cette sonde à courant de Foucault, initialement destinée à la détection d'endommagement des tubes, est également sensible au colmatage. De plus, l'interprétation de ce signal est actuellement réalisée manuellement par des opérateurs spécialisés, ce qui est très long, de l'ordre d'une semaine de traitement environ pour l'analyse d'un seul générateur de vapeur. De plus, l'intervention d'un opérateur pour relever des mesures à partir d'un logiciel d'analyse donne souvent lieu à un biais difficile à quantifier.

L'évaluation de l'aspect colmaté d'un passage folié par un opérateur à partir du signal de mesure est en outre très peu fiable, étant généralement effectuée empiriquement au vu du signal reçu.

L'article "Tube Support Plate Blockage Evaluation with Televisual Examination and Eddy Current Analysis" de L. Châtelier et al., AIP Conference proceedings, vol.1096, 25 juillet 2008, pages 766, 773, décrit la détermination d'un taux de colmatage au moyen du calcul d'un indicateur appelé ratio SAX $r_{sax}$, qui est un indicateur scalaire permettant de mesurer le niveau de colmatage à partir de la différence d'amplitude des signaux des deux côtés de la plaque entretoise. Ce ratio $r_{sax}$ est défini en tant que ratio entre le différentiel d'amplitude entre les bords supérieur et inférieur de la plaque entretoise au niveau du passage du tube à travers la plaque entretoise, et le maximum des deux:

$$r_{sax} = \frac{|Y_1 - Y_2|}{\max(Y_1, Y_2)}$$

Une corrélation est démontrée entre les valeurs prises par le ratio SAX et le taux de colmatage déterminé par l'examen télévisuel des passages des plaques entretoise. Cependant, la corrélation est limitée à des taux de colmatage inférieurs à 50 %, et, en raison du manque de précision entre la valeur du ratio SAX et le taux de colmatage, la précision obtenue n'est pas bonne, de sorte qu'il n'est possible d'obtenir qu'une estimation large du colmatage, par classes de colmatage (0-15%, 15-25%, 25-50%).

En outre, cette corrélation entre le ratio SAX et le taux de colmatage estimé par l'examen télévisuel dépend du type de générateur de vapeur. De plus, en cas de perturbations, ce qui est courant car la sonde à courant de Foucault réagit à tous les défauts, le ratio SAX intègre toutes ces perturbations et n'est alors pas représentatif du colmatage. Par exemple, une rupture d'encrassement au voisinage du bord de plaque entretoise influe sur le signal de la sonde à courant de Foucault, donc sur le ratio SAX, puisque celui-ci ne permet de discriminer les causes de perturbation.

Le document EP 2 474 826 A1 propose un procédé d'évaluation du colmatage, dans lequel des mesures par courant de Foucault sont relevées, et les signaux correspondants aux passages des plaques entretoises sont identifiés puis, une valeur moyenne est déterminée, qui est utilisée comme signal d'évaluation. Des caractéristiques extraites de ces signaux sont ensuite utilisées comme indicateurs de colmatage et un taux de colmatage est déduit. Par exemple, la distance entre les points extrêmes d'une représentation Lissajous peut être utilisée pour déterminer le taux de colmatage, au moyen d'une courbe de calibration prédéterminée liant ladite distance à un taux de colmatage.

Dans un autre exemple, la comparaison est effectuée au moyen d'une équation prédéterminée. L'équation est décrite comme étant obtenue au moyen de données relevées sur un dispositif dont les caractéristiques de colmatage sont connues. Le taux de colmatage correspond au résultat de l'équation prenant comme variables les indicateurs de colmatage.

Ces méthodes impliquent donc une prédétermination d'un modèle se traduisant soit par une courbe de calibration ou par une équation. Elles supposent donc une relation simple entre les caractéristiques extraites et le taux de colmatage, et supposent qu'un taux de colmatage se traduit par une même forme de signal. Or, il s'avère que ce n'est pas le cas, et qu'un même taux de colmatage peut donner des signaux variés, et que par conséquent il n'est pas possible de modéliser simplement la relation entre le signal de mesure et le taux de colmatage. Ces méthodes ne permettent donc pas une appréciation correcte du taux de colmatage.

Le document EP 2 584 254 A2, dans un contexte similaire au précédent, propose un procédé visant à prévoir l'évolution du colmatage en déterminant, pour chaque passage de plaque entretoise, le rythme de colmatage. A cet effet, il est prévu un modèle de visualisation des plaques entretoises illustrant le colmatage des passages, et leur évolution. Cette évolution est déterminée au moyen d'une courbe de colmatage qui est déterminée par des mesures via des inspections visuelles et par courants de Foucault.

Pour déterminer la courbe d'évaluation de colmatage, une relation est établie entre le niveau réel de colmatage obtenu par l'inspection visuelle d'un passage et un indicateur de colmatage du signal de la sonde à courant de Foucault correspondant, par exemple une distance sur une représentation Lissajous comme précédemment. Les mesures ultérieures par courants de Foucault permettent de recaler l'estimation du rythme de colmatage en estimant le niveau de colmatage en comparant l'indicateur de colmatage déterminé à partir du signal de la sonde à courant de Foucault avec la courbe d'évaluation de colmatage.

Le procédé proposé par le document EP 2 584 254 A2 est donc basé sur la même hypothèse que celui du document EP 2 474 826 A1, à savoir l'existence d'un modèle représentatif d'une relation simple entre le signal de mesure et le taux de colmatage. Or, l'expérience a montré que ce n'est pas le cas, et par conséquent les procédés proposés ne permettent pas d'estimation correcte du taux de colmatage.

PRESENTATION DE L'INVENTION

Un but général de l'invention est de pallier tout ou partie des défauts des méthodes d'évaluation du colmatage des passages foliés autour des tubes dans les plaques entretoises de l'état de la technique, en proposant de comparer un vecteur constitué de plusieurs indicateurs de colmatage avec d'autres vecteurs constitués de plusieurs indicateurs de colmatage.

Il est notamment proposé un procédé d'évaluation du colmatage de passages d'une plaque entretoise d'un échangeur thermique à tubes, lesdits passages étant ménagés le long des tubes pour la traversée de la plaque entretoise par un fluide, dans lequel, pour chacun d'au moins un passage :

- on réalise au voisinage du passage au moins une mesure d'un paramètre dépendant du colmatage ou de la présence de magnétite au moyen d'une sonde à courant de Foucault,
- on dérive de cette mesure au moins un indicateur de colmatage dudit passage,

caractérisé en ce que le colmatage est évalué en comparant un ensemble de un ou plusieurs vecteurs d'indicateurs de colmatage de dimension au moins deux, construits à partir des indicateurs de colmatage ainsi obtenus, avec une pluralité d'ensembles de vecteurs d'indicateurs de colmatage contenus dans une base de

données, chacun desdits ensembles de vecteurs d'indicateurs de colmatage de la base de données étant associé à un descripteur quantitatif de colmatage.

Ce procédé est avantageusement complété par les caractéristiques suivantes, prises seules ou en une quelconque de leurs combinaisons techniquement possible :

- les ensembles de vecteurs d'indicateurs de colmatage sont représentés par des distributions de vecteurs d'indicateurs de colmatage de passages d'une portion de plaque entretoise et le descripteur quantitatif associé à chaque distribution est un taux de colmatage moyen des passages de ladite portion de plaque entretoise, ladite base de données portant sur au moins N portions de plaques entretoises de différents échangeurs thermiques, N≥2, et comportant N distributions de vecteurs d'indicateurs associés chacun à un taux de colmatage moyen des passages de ladite portion de plaque entretoise ;
- les distributions de vecteurs d'indicateurs de colmatage sont associées à des informations spatiales, de sorte de correspondre à des images représentatives de la répartition spatiale des valeurs de colmatage ;
- le procédé comprend les étapes selon lesquelles

  - on détermine la distribution de vecteurs d'indicateurs $P_{test}(\theta)$ de la portion de plaque inspectée,
  - on calcule une mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données,
  - on sélectionne les K distributions de vecteurs d'indicateurs $P_n(\theta)$ de la base de données dont les mesures de similarité $d_n$ d'avec la distribution d'indicateurs $P_{test}(\theta)$ de la portion de plaque entretoise inspectée sont les plus grandes,
  - on détermine le colmatage à partir des taux de colmatage associés auxdites K distributions de vecteurs d'indicateurs $P_n(\theta)$ de la base de données sélectionnées ;

- la détermination du colmatage comprend une étape selon laquelle :

  - on calcule une moyenne des taux de colmatage associés auxdites K distributions de vecteurs d'indicateurs $P_n(\theta)$ de la base de données sélectionnées, chaque taux de colmatage étant pondéré par la mesure de similarité entre la distribution de vecteurs d'indicateur $P_n(\theta)$ de la base de données auquel il est associé et la distribution de vecteurs d'indicateurs $P_{test}(\theta)$ de la portion de plaque entretoise inspectée ;

- le procédé comprend en outre une détermination d'une évaluation de l'incertitude sur le colmatage ainsi déterminé, sur la base de la mesure de la similarité entre les K distributions de vecteurs d'indicateurs $P_n(\theta)$ de la base de données ainsi sélectionnées et la distribution de vecteurs d'indicateurs $P_{test}(\theta)$ de la portion de plaque entretoise inspectée et/ou de la variabilité des descripteurs quantitatifs de colmatage associés aux distributions de vecteurs d'indicateurs de portion de plaque entretoise sélectionnée ;
- le calcul de la mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données comprend une estimation des distributions au moyen d'un modèle de loi de probabilité $\mathbb{P}$, de préférence une loi gaussienne, une modélisation de Parzen ou une moyenne pondérée de lois de probabilité ;
- un ensemble d'indicateurs de colmatage est un vecteur d'indicateurs de colmatage d'un tube et le descripteur quantitatif associé audit vecteur est un taux de colmatage dudit tube, ladite base de données portant sur au moins M tubes de différents échangeurs thermiques, M≥2, ladite base de données comportant M vecteurs d'indicateurs du colmatage d'un passage, associés chacun à un taux de colmatage dudit passage ;
- le procédé comprend les étapes selon lesquelles :

  - on détermine le vecteur d'indicateurs $\theta$ du tube inspecté,

- on calcule la distribution de colmatage c a posteriori p(c|θ) pour le vecteur d'indicateurs θ du tube inspecté à partir des vecteurs d'indicateurs de la base de données,
- on détermine le colmatage par la somme de la distribution de colmatage a posteriori p(c|θ) pondérée par le colmatage ;

- le calcul de la loi a posteriori comprend une estimation de la loi a priori p(c) et de la vraisemblance p(θ|c) ;
- la loi a priori est déterminée par un rapport entre :

    - le nombre $M_k$ de tubes de la base de données présentant un taux de colmatage c compris dans un intervalle $[c_k; C_{k+1}]$, et
    - le nombre total de tubes dans la base de données ;

- la loi de vraisemblance est approchée sur c compris sur un intervalle $[c_k; C_{k+1}]$ par une loi de probabilité $\mathbb{P}$, de préférence une loi gaussienne, une modélisation de Parzen, ou une moyenne pondérée de lois ;
- les ensembles de vecteurs d'indicateurs de colmatage de la base de données sont des paquets ayant chacun un centre ou une moyenne et regroupant sur la base d'une mesure de similarité portant sur les valeurs desdits vecteurs d'indicateurs de colmatage, les vecteurs d'indicateurs de colmatage qui sont les plus proches, au sens de la mesure de similarité, dudit centre ou de ladite moyenne, un descripteur quantitatif de colmatage étant associé à chacun desdits paquets, et dans lequel, pour un ensemble de un ou plusieurs vecteurs d'indicateurs de colmatage du tube ou de la portion de plaque inpecté :

    - on compare chacun des vecteurs d'indicateurs de l'ensemble de vecteurs d'indicateurs de colmatage du tube ou portion de plaque inspecté avec les centres ou moyennes respectifs des paquets de la base de données par une mesure de similarité,
    - on sélectionne m paquets de vecteurs d'indicateurs de colmatage sur la base de cette comparaison, - on détermine le taux de colmatage du tube ou portion de plaque inspecté à partir des descripteurs quantitatifs associés aux m paquets de vecteurs d'indicateurs sélectionnés.

De préférence, le taux de colmatage du tube ou portion de plaque inspecté est déterminé à partir d'une moyenne des descripteurs quantitatifs de chaque paquet pondérée à partir des mesures de similarité calculées.

L'invention concerne également un produit programme d'ordinateur comprenant des instructions de code de programme pour l'exécution des étapes du procédé selon l'invention lorsque ledit programme est exécuté sur un ordinateur.

## PRESENTATION DES FIGURES

D'autres caractéristiques, buts et avantages de l'invention ressortiront de la description qui suit, qui est purement illustrative et non limitative, et qui doit être lue en regard des dessins annexés parmi lesquels:

- la figure 1, déjà commentée, illustre schématiquement, en vue de dessus, un passage folié dans une plaque entretoise, dans lequel passe un tube, selon une configuration courante d'un générateur de vapeur ;
- la figure 2 illustre schématiquement les étapes du procédé selon une première variante de l'invention ;

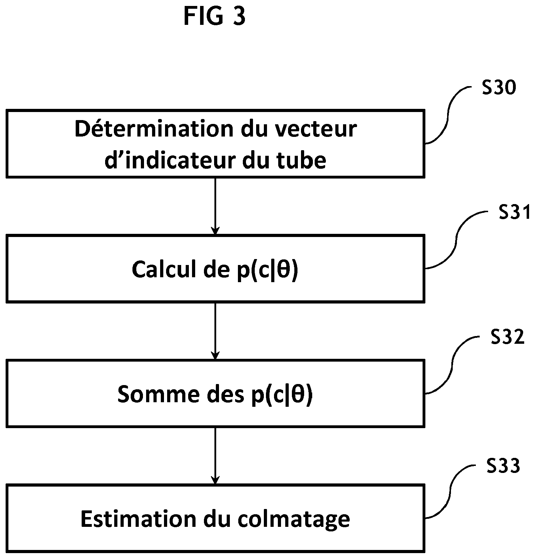

- la figure 3 illustre schématiquement les étapes du procédé selon une seconde variante de l'invention.

## DESCRIPTION DETAILLEE

Le procédé commence de façon connue par l'homme du métier par la réalisation, au voisinage de passages d'au moins une mesure d'un paramètre dépendant du colmatage ou de la présence de magnétite, typiquement au moyen d'une sonde à courant de Foucault, dont la mesure est représentative des variations d'impédance que peut causer le colmatage, par exemple par de la magnétite.

On dérive ensuite de cette mesure au moins un indicateur de colmatage dudit passage. La description ci-dessous donne un exemple non limitatif de dérivation d'un tel indicateur de colmatage.

Après extraction à partir du signal de mesure d'un signal correspondant au passage du bord aval de la plaque entretoise 10 par la sonde, et d'un signal correspondant au passage du bord amont de la plaque entretoise 10 par la sonde, on procède alors à la détermination à partir du signal de mesure d'un signal de bord inférieur correspondant au passage du bord aval de la plaque entretoise 10 par la sonde, et d'un signal de bord supérieur correspondant au passage du bord amont de la plaque entretoise 10 par la sonde.

La sonde à courant de Foucault acquiert typiquement au moins en partie le signal de mesure en mode différentiel, et le signal de mesure est un signal multifréquence composé d'au moins deux signaux à des fréquences différentes.

De préférence, seuls les signaux correspondant au mode différentiel ($z_1$ et $z_3$) sont utilisés car plus sensibles au passage de la plaque entretoise 10. Ces signaux sont acquis à des fréquences différentes, et le signal de bord inférieur est déterminé en tant que combinaison linéaire d'au moins deux signaux à des fréquences différentes dudit signal de mesure, en l'occurrence $z_1$ et $z_3$.

Cette combinaison linéaire fait intervenir un coefficient complexe $\propto$ optimisé pour minimiser la puissance de signal le long du tube 11 hors des zones de plaque entretoise 10.

Ainsi, le signal de bord inférieur $z_{inf}$ est déterminé à partir des signaux obtenus en mode différentiel sur les fréquences f3 et f1, de sorte que

$$z_{inf}[n] = z_{3inf}[n] - \propto.z_{1inf}[n],$$

avec

$$\propto = argmin\|z_3[n] - \propto \times z_1[n]\|^2,$$

pour les indices n correspondant au signal hors des zones de plaque entretoise 10, et $z_{3inf}$ correspondant à la réponse de la sonde en mode différentiel sur la fréquence f3 lors du passage du bord aval, c'est-à-dire inférieur, de la plaque entretoise 10 par la sonde, et $z_{1inf}$ correspondant à la réponse de la sonde en mode différentiel sur la fréquence f1 lors du passage du bord aval, c'est-à-dire inférieur, de la plaque entretoise 10 par la sonde.

On procède de même avec le signal de bord supérieur, avec de préférence le même coefficient $\propto$, de sorte que $z_{sup}[n] = z_{3sup}[n] - \propto.z_{1sup}[n]$, avec $z_{3sup}$ correspondant à la réponse de la sonde en mode différentiel sur la fréquence f3 lors du passage du bord amont, c'est-à-dire supérieur, de la plaque entretoise 10 par la sonde, et $z_{1sup}$ correspondant à la réponse de la sonde en mode différentiel sur la fréquence f1 lors du passage du bord amont, c'est-à-dire supérieur, de la plaque entretoise 10 par la sonde.

On obtient ainsi deux signaux complexes. Le signal de bord inférieur $z_{inf}$ s'écrit :

$$z_{inf}[n] = x_{inf}[n] + i.y_{inf}[n]$$

avec $x_{inf}$ et $y_{inf}$ les composantes respectivement réelle et imaginaire du signal de bord inférieur et i l'unité imaginaire telle que $i^2 = -1$. De même le signal de bord supérieur $z_{sup}$ s'écrit:

$$z_{sup}[n] = x_{sup}[n] + i.y_{sup}[n]$$

avec $x_{sup}$ et $y_{sup}$ les composantes respectivement réelle et imaginaire du signal de bord supérieur et i l'unité imaginaire telle que $i^2 = -1$.

Il reste donc à mettre en oeuvre un traitement adéquat de ces signaux afin d'évaluer le colmatage du passage de la plaque entretoise 10. Ce traitement est mis en oeuvre sur le signal de bord inférieur, qui est un signal complexe. En effet, le colmatage des passages foliés, c'est-à-dire les lobes 12a, 12b, dans les plaques entretoises 10 intervient au niveau du bord inférieur des plaques entretoises 10, en amont du passage pour le flux de fluide traversant la plaque entretoise 10. C'est donc à partir du signal de bord inférieur que peut être estimé le taux de colmatage.

Plus précisément, le signal de bord inférieur est déconvolué par la réponse impulsionnelle complexe de la sonde.

De fait, dans un cas idéal d'une sonde SAX parfaite le signal ne devrait contenir qu'une suite d'impulsions complexes, correspondant au passage par un bord de plaque entretoise 10, à la rencontre d'un dépôt, et l'étude du seul signal de bord inférieur devrait suffire à quantifier le colmatage.

Cependant, en pratique, la réponse de la sonde SAX à une variation d'impédance n'est pas parfaite. On l'appelle la réponse impulsionnelle de la sonde. Il est donc nécessaire de restaurer le signal de bord inférieur pour retrouver la réponse de la sonde représentative de l'état de colmatage du passage folié dans la plaque entretoise 10.

On détermine à cet effet une estimation de la réponse impulsionnelle de la sonde, de préférence correspondant au passage d'un bord propre de la plaque entretoise 10 par la sonde dans le tube 11, par exemple à partir du signal de bord supérieur. On cherche alors à déconvoluer le signal de bord inférieur $z_{inf}[n]$ par un signal $h[n]$ correspondant à la réponse impulsionnelle de la sonde au passage de la plaque entretoise.

Pour ce faire, on peut utiliser un filtre. Un tel filtre est appelé filtre de déconvolution ou encore filtre de restauration. Le filtre de déconvolution est calculé à partir de l'estimation de la réponse impulsionnelle, et on met en oeuvre une déconvolution du signal de bord inférieur au moyen dudit filtre de déconvolution. Le filtre de déconvolution peut être une approximation de l'inverse de la réponse impulsionnelle de la sonde. Il peut être aussi un filtre de Wiener et la déconvolution ainsi être une déconvolution de Wiener, ce qui constitue un mode de réalisation préférentiel du procédé décrit. D'autres méthodes de déconvolution existent et peuvent être utilisées.

Par exemple, on peut chercher le signal de bord inférieur déconvolué $z_{inf,id}[n]$ qui correspond le mieux au signal de bord inférieur $z_{inf}[n]$ qui a été observé :

$$z_{inf,id}[n] = argmin_{z[n]}\{J_1(z_{inf}[n] - z[n] \otimes h[n]) + \lambda \times J_2(z[n])\}$$

avec $J_1$ le critère d'adéquation aux données (par exemple une norme $L_2$, une norme $L_2$ au carré, une norme $L_1$, ...) et $J_2$ un critère traduisant une caractéristique a priori connue sur le signal que l'on cherche à reconstruire (par exemple une norme $L_2$, une norme $L_2$ au carré, une norme $L_1$, une fonction des écarts entre échantillons voisins $z[n]-z[n-1]$). Le terme $\lambda$ permet d'accorder plus ou moins d'importance à l'a priori sur la solution ($J_2$) par rapport à l'adéquation aux données ($J_1$). Ce critère peut également s'écrire dans le domaine fréquentiel.

Il y a donc plusieurs variantes de critères de déconvolution J1 et J2 qui peuvent être utilisées, et, pour chaque variante, plusieurs méthodes de résolutions, par exemple par filtrage ou par des méthodes d'optimisation.

Dans le cas où le filtre de déconvolution est un filtre de Wiener, la réponse en fréquence du filtre de Wiener est de la forme:

$$G[f] = \frac{H^*[f]}{\|H[f]\|^2 + \frac{B[f]}{S[f]}}$$

avec l'exposant * désignant la conjugaison complexe, $H[f]$ la transformée de Fourier de la réponse impulsionnelle de la sonde, $S[f]$ la densité spectrale de puissance du signal à estimer et $B[f]$ la densité spectrale de puissance du bruit. Un bourrage de zéros ou *zero-padding,* c'est-à-dire un ajout de zéros au sein des signaux, peut être effectué lors du calcul des transformées de Fourier discrètes afin d'augmenter la résolution fréquentielle.

La réponse impulsionnelle $h[n]$ de la sonde peut être estimée à partir de la réponse de la sonde au passage du bord amont de la plaque entretoise 10 par la sonde, c'est-à-dire au moyen du signal de bord supérieur, selon la formule :

$$h[n] = -z_{sup}[-n].$$

Par exemple, à partir des traitements effectués pour extraire les parties utiles du signal de mesure, on connait les indices $i_{inf}$ et $i_{sup}$ du signal de mesure correspondant respectivement aux passages des bords inférieur et supérieur de la plaque entretoise 10. Pour une fréquence d'échantillonnage Fe= 1000 Hz, une vitesse de la sonde v=0,5 m.s$^{-1}$ et une longueur de plaque entretoise 10 de 30 mm, on a 60 échantillons de signal correspondant à la plaque entretoise 10, et une réponse impulsionnelle de 20 échantillons environ. On peut alors choisir pour la plage de valeurs du signal de bord supérieur $z_{sup}[n]$ les 60 échantillons suivant le centre de la plaque entretoise 10 déterminé à environ $0,5 \times (i_{inf} + i_{sup})$, soit une marge de 20 échantillons de chaque côté de la réponse impulsionnelle. Ces chiffres sont bien sûr indiqués en tant qu'exemple non limitatif de l'utilisation du signal de bord supérieur $z_{sup}[n]$ pour l'estimation de la réponse impulsionnelle de la sonde.

Plusieurs approches sont possibles pour estimer le rapport bruit sur signal correspondant au ratio de la densité spectrale de puissance du bruit $B[f]$ et de la densité spectrale de puissance $S[f]$ du signal à estimer. Une de ces approches consiste à approximer ce rapport par une constante. En effet, le signal à estimer correspond à un signal de bord inférieur idéal qui présenterait une suite d'impulsions correspondant aux variations d'impédance complexe rencontrées par la sonde au voisinage du bord inférieur de la plaque entretoise 10. Par conséquent, la densité spectrale de puissance $S[f]$ de ce signal peut être considérée comme une constante. La densité spectrale de puissance du bruit $B[f]$ peut être déterminée sur les portions du signal entre les plaques entretoises 10. Celui-ci peut être assimilé à un bruit blanc, et donc cette densité spectrale de puissance du bruit $B[f]$ peut être considérée comme une constante. Ainsi le rapport des densités spectrales de puissance du bruit et du signal à estimer peut être considéré comme une constante. Cette constante peut être réglée empiriquement, en prenant par exemple :

$$\frac{B[f]}{S[f]} = 10 \times \sigma^2,$$

avec $\sigma^2$ la puissance du bruit, calculée sur une zone hors plaques.

Une fois le filtre de déconvolution déterminé, on peut alors procéder à la déconvolution du signal de bord inférieur au moyen dudit filtre de déconvolution. On applique alors le filtre de déconvolution g au signal de bord inférieur $z_{inf}$ pour obtenir un signal de bord inférieur déconvolué complexe $z_{inf\ id}$ introduit par la réponse impulsionnelle de la sonde:

$$z_{inf\ id} = z_{inf} * g$$

En pratique, cette opération peut être réalisée dans le domaine fréquentiel :

$$z_{inf\ id} = \mathrm{TF}^{-1}\{Z_{inf}[f] \times G[f]\},$$

avec $Z_{inf}[f]$ la transformée de Fourier du signal de bord inférieur $z_{inf}$, G[f] la transformée de Fourier du filtre de déconvolution g, et TF$^{-1}$ indiquant la transformation de Fourier inverse.

Afin d'éviter d'amplifier trop sensiblement certaines fréquences ne correspondant qu'à du bruit de mesure, un filtrage par un filtre passe-bas est appliqué au signal de bord inférieur déconvolué, la fréquence de coupure dudit filtre passe-bas étant déterminée au moyen d'un écart-type d'une fonction gaussienne constituant une approximation de la partie réelle d'une impulsion du signal de bord inférieur correspondant au passage de bord de plaque entretoise 10.

En effet, la partie réelle ou imaginaire d'une impulsion du signal de bord inférieur correspondant au passage de bord de plaque entretoise 10 présente des formes très proches de fonctions gaussiennes ou de leurs dérivées. Par exemple, on peut assimiler à une fonction gaussienne l'impulsion 0 dans la partie réelle du signal de bord inférieur correspondant au passage du bord inférieur de la plaque entretoise 10 dans une configuration sans colmatage, et à une combinaison linéaire de dérivées de la fonction gaussienne les impulsions dans la partie imaginaire du signal de bord inférieur correspondant au passage du bord inférieur de la plaque entretoise 10 dans une configuration colmatée.

Si $\sigma$ est l'écart-type de cette fonction gaussienne, généralement de l'ordre de 3 ou 4 échantillons, les transformées de Fourier des signaux à déconvoluer ne contiennent plus d'énergie au-delà d'une fréquence maximale $f_{max}$:

$$f_{max} = \frac{3}{2\pi\sigma}.$$

On peut donc choisir cette fréquence maximale $f_{max}$ en tant que fréquence de coupure du filtre passe-bas.

Une fois le signal de bord inférieur déconvolué ainsi filtré, il reste à analyser celui-ci pour évaluer le colmatage. On dispose alors, à la suite du processus décrit ci-dessus, au cours duquel on a réalisé au voisinage de chacun des passages au moins une mesure d'un paramètre dépendant du colmatage ou de la présence de magnétite, d'indicateurs de colmatage dudit passage qui sont dérivés de cette mesure.

Divers types d'indicateurs peuvent être utilisés. Par exemple, Si on appelle y+ (resp y-) les valeurs positives (resp. négatives) prises par la partie imaginaire du signal obtenu au voisinage du bord inférieur de la plaque après déconvolution, et si on définit les différentes grandeurs suivantes :

- $E_{Y+}$ / $E_{Y-}$: énergie de $y_+$ et de $y_-$
- $P_{Y+}$ / $P_{Y-}$: puissance de $y_+$ et de $y_-$
- $M_{Y+}$ / $M_{Y-}$ : valeur maximale de $y_+$ et de $|y_-|$
- $\Gamma_{Y+}$ / $\Gamma_{Y-}$ : écart-type des valeurs prises par $y_+$ et par $y_-$

On peut également prendre les valeurs minimales et maximales des grandeurs ci-dessous, par exemple pour chaque couple de grandeurs physiques, $X_{Y+}$ / $X_{Y-}$, avec X correspondant à E, P, M ou $\Gamma$, on peut définir un indicateur minimal et un indicateur maximal :

- $X_{min} = \min\{X_{Y+}, X_{Y-}\}$
- $X_{max} = \max\{X_{Y+}, X_{Y-}\}$.

On évalue ensuite le colmatage en comparant un ensemble de un ou plusieurs vecteurs d'indicateurs de colmatage, de dimension au moins deux, construits à partir des indicateurs ainsi obtenus, avec une pluralité d'ensembles de vecteurs d'indicateurs de colmatage contenus dans une base de données, chacun desdits ensembles étant associé à un descripteur quantitatif de colmatage. Un vecteur d'indicateurs de colmatage est de préférence de dimension au moins deux, c'est-à-dire qu'il n'est de préférence pas un scalaire.

Chaque vecteur d'indicateurs est de dimension au moins deux, ce qui signifie qu'il comprend au moins deux indicateurs en tant que composants. Par exemple, on peut construire un vecteur d'indicateurs comprenant comme composantes :

- l'énergie $E_{Y+}$ des valeurs positives prises par la partie imaginaire du signal obtenu au voisinage du bord inférieur de la plaque après déconvolution, et
- l'énergie $E_{Y-}$ des valeurs négatives prises par la partie imaginaire du signal obtenu au voisinage du bord inférieur de la plaque après déconvolution.

Le vecteur d'indicateurs s'écrit alors $(E_{Y+}; E_{y-})$. D'autres vecteurs d'indicateurs peuvent être utilisés, combinant deux ou plus d'indicateurs,

Les indicateurs de colmatage contenus dans une base de données sont typiquement des taux de colmatage issus d'inspection télévisuelle (ETV). La conception des générateurs de vapeurs permet en effet l'inspection de leur plaque entretoise supérieure par le bais d'une caméra robotisée. Sur chaque cliché, on observe un des foliages de l'intersection tube/plaque. Le taux de colmatage du passage folié observé est évalué en mesurant la réduction de section au niveau du bord inférieur. En considérant que le phénomène d'obstruction est homogène sur chacun des foliages de l'intersection tube/plaque, on obtient le taux de colmatage du passage de cette dernière.

Cette méthode permet, au contraire de l'examen par sonde à courant de Foucault, de disposer d'une indication quantitative du taux de colmatage de la plaque, ce qui constitue un descripteur quantitatif du colmatage. Mais elle n'est applicable qu'à la plaque entretoise supérieure, à l'exception de certains types de générateurs de vapeur permettant aussi le passage de l'appareillage de prises de vue sur quelques tubes de la plaque intermédiaire. L'ETV ne permet donc pas d'obtenir le profil du colmatage sur l'ensemble du générateur de vapeur. D'autre part, sur une plaque inspectée, les tubes périphériques restent inaccessibles.

Ces examens télévisuels sont cependant réalisés de longue date, et les résultats en sont stockés dans des bases de données, de sorte qu'il existe une grande quantité de données qui peuvent être exploitées, pour déduire l'évaluation quantitative du colmatage en combinant les évaluations quantitatives des examens télévisuels passés avec une inspection des tubes par courant de Foucault.

Il est à noter que les étapes des procédés suivants sont mises en oeuvre par au moins un ordinateur, une unité centrale ou de calcul, un circuit électronique analogique, un circuit électronique numérique, un microprocesseur, et/ou des moyens logiciels.

### *Estimation sur l'ensemble d'une portion de plaque*

Dans une première variante du procédé, on cherche ici à estimer directement le taux de colmatage moyen par portion de plaque entretoise, sans passer par une évaluation du colmatage de chacun de ses tubes.

Les ensembles d'indicateurs de colmatage de la base de données sont donc représentés par des distributions de vecteurs d'indicateurs de colmatage de passages d'une portion de plaque entretoise et le descripteur quantitatif associé à chaque distribution est un taux de colmatage moyen des passages de ladite portion de plaque entretoise, ladite base de données portant sur au moins N portions de plaques entretoises de différents échangeurs thermiques, $N \geq 2$, et comportant N distributions de vecteurs d'indicateurs associés chacun à un taux de colmatage moyen des passages de ladite portion de plaque entretoise.

Dans l'exemple ci-après, les portions de plaque entretoise sont des demi-plaques entretoises, correspondant à la partie des plaques entretoises présentes dans la branche froide ou chaude de l'échangeur thermique, ici un générateur de vapeur. On suppose donc que l'on dispose de N demi-plaques pour lesquelles on connaît le taux de colmatage déduit de l'examen télévisuel $C_n$ et les valeurs des vecteurs d'indicateurs $\theta$ pour chacun de leurs tubes.

### Approche par mesure de similarité entre distribution de vecteurs d'indicateurs

Une première approche repose sur des mesures de similarité entre distributions de vecteurs d'indicateurs. Le principe de cette approche est de reconnaître dans la base de données à disposition les distributions de vecteurs d'indicateurs les plus ressemblantes à celle de la demi-plaque que l'on cherche à évaluer. On considère $P_{test}(\theta)$, la distribution de vecteurs d'indicateurs de la demi-plaque inspectée, et $P_n(\theta)$ ($n \in [\![1, N]\!]$) les distributions de vecteurs d'indicateurs des N demi-plaques disponibles dans la base de données.

Ainsi, après avoir déterminé la distribution de vecteurs d'indicateurs $P_{test}(\theta)$ de la portion de plaque inspectée (étape S20), on calcule une mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données (étape S21).

La mesure de similarité entre distributions peut être par exemple évaluée au moyen d'une fonction distance que l'on notera D. On calcule ainsi la distance $d_n$ entre la distribution de vecteurs d'indicateurs de la plaque à évaluer $P_{test}(\theta)$ et chacune des distributions $P_n(\theta)$ de la base de données :

$$d_n = D(P_{test}, P_n)$$

Il existe plusieurs mesures de similarité qui peuvent être utilisées. On peut notamment utiliser par exemple la divergence de Kullback-Leibler, la distance de Bhattacharyya ou encore la distance de Hellinger. Cette dernière offre en particulier l'avantage de donner un résultat borné entre 0 et 1, s'avérant ainsi interprétable dans l'absolu. Sa formule est donnée par l'équation suivante :

$$D_H(P, Q) = \frac{1}{\sqrt{2}} \sqrt{\sum_i \left( \sqrt{p_i} - \sqrt{q_i} \right)^2}$$

avec p et q les vecteurs d'indicateurs des distributions de vecteurs d'indicateurs P et Q, respectivement.

On peut alors sélectionner (étape S22), parmi des N distances ainsi calculées, les K plus petites ($K \in [\![1, N]\!]$), correspondant donc aux distributions les plus ressemblantes. On sélectionne donc les K distributions d'indicateurs $P_n(\theta)$ de la base de données dont les mesures de similarité d'avec la distribution d'indicateurs $P_{test}(\theta)$ de la portion de plaque entretoise inspectée sont les plus grandes. Quand la mesure de similarité est une distance, cela revient donc à prendre les K distributions les plus petites.

On détermine ensuite le colmatage (étape S23) à partir des taux de colmatage associés auxdites K distributions de vecteurs d'indicateurs $P_n(\theta)$ de la base de données sélectionnées.

Il est possible de calculer une moyenne des taux de colmatage associés auxdites K distributions de vecteurs d'indicateurs $P_n(\theta)$ de la base de données sélectionnées, chaque taux de colmatage étant pondéré par la mesure de similarité entre la distribution de vecteurs d'indicateurs $P_n(\theta)$ de la base de données auquel il est associé et la distribution de vecteurs d'indicateurs $P_{test}(\theta)$ de la portion de plaque entretoise inspectée.

On pondère alors la moyenne des colmatages de ces K demi-plaques par leurs distances respectives à la distribution de vecteurs d'indicateurs de la demi-plaque à évaluer, de façon à donner plus de poids aux plus ressemblantes :

$$\hat{c}_{test} = \frac{\sum_{k=1}^{K} d_k^{-1} c_k}{\sum_{k=1}^{K} d_k^{-1}}$$

Le calcul de la mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données peut comprendre une estimation des distributions au moyen d'un modèle de loi de probabilité P, de préférence une loi gaussienne, une modélisation de Parzen ou une moyenne pondérée de lois de probabilité.

En effet, mesurer des distances entre distributions nécessite toutefois d'estimer ces dernières. On peut les approcher alors par un modèle de loi de probabilité P, fonction de paramètres ω à déterminer, construit d'après les observations dont on dispose :

$$P(\theta) \approx \mathbb{P}(\theta, \omega)$$

La question du choix de P est ouverte : celui-ci peut par exemple se porter sur une loi gaussienne multidimensionnelle :

$$P(\theta) \approx N\big(\theta, \mu, \mathbf{\Sigma}\big)$$

où $\mu$ représente le vecteur d'indicateurs moyen de la demi-plaque, et $\Sigma$ sa matrice de variance-covariance (ces deux éléments constituant les paramètres de la distribution à calculer).

On peut aussi se tourner vers une modélisation de Parzen. Son principe est de placer une fonction noyau, par exemple une gaussienne sur chacune des observations de la population statistique dont on cherche à estimer la densité de probabilité. La somme de toutes ces gaussiennes donne la vraisemblance de Parzen.

Dans le cas considéré, les observations sont les vecteurs d'indicateurs extraits de chacun des tubes. La distribution des vecteurs d'indicateurs de la demi-plaque n comportant $M_n$ tubes de vecteurs d'indicateurs $\theta_m$ ($m \in [\![1, M_n]\!]$) de dimension d est alors donnée par :

$$P_n(\theta) = \frac{1}{\sqrt{|\mathbf{\Sigma}_n|}(2\pi)^{\frac{d}{2}}h^d} \sum_{m=1}^{M_n} \exp\left(-\frac{1}{2h^2}(\theta - \theta_m)^T \mathbf{\Sigma}_n^{-1}(\theta - \theta_m)\right)$$

Le paramètre h représente la variance de la gaussienne (c'est-à-dire sa largeur) à appliquer sur chacune des observations. On utilise usuellement la même valeur sur chacune des observations. On peut prendre par exemple h = 0,5. La matrice de variance-covariance $\Sigma_n$ est calculée sur l'ensemble des vecteurs d'indicateurs appartenant à la demi-plaque n. On peut approcher sa matrice inverse par la matrice formée de ses seuls coefficients diagonaux inverses, selon

$$\mathbf{\Sigma}_n^{-1} = \big(\sigma_{i,j}\big)^{-1} \approx \begin{pmatrix} \frac{1}{\sigma_{1,1}} & \ldots & 0 \\ \vdots & \ddots & \vdots \\ 0 & \ldots & \frac{1}{\sigma_{d,d}} \end{pmatrix}$$

avec $i,j \in [\![1,d]\!]$.

Par ailleurs, la mesure de similarité entre distributions permet d'introduire un score d'incertitude du résultat : de faibles distances entre une demi-plaque à évaluer et certaines demi-plaques de la base de données augurent d'une forte ressemblance avec des exemples de colmatage déjà observés, et donc d'une confiance élevée dans le résultat. A l'inverse, une demi-plaque atypique, se différenciant de l'historique à disposition, verra sa distribution de vecteurs d'indicateurs éloignée de toutes les autres, traduisant une incertitude plus importante sur le résultat de l'estimation.

Le procédé peut ainsi comprendre une détermination d'une évaluation de l'incertitude sur le colmatage ainsi déterminé, sur la base de la mesure de la similarité entre les K distributions de vecteurs d'indicateurs $P_n(\theta)$ de la base de données ainsi sélectionnées et la distribution de vecteurs d'indicateurs $P_{test}(\theta)$ de la portion de plaque entretoise inspectée, et/ou de la variabilité des descripteurs quantitatifs associés aux distributions de vecteurs d'indicateurs de portion de plaque entretoise, c'est-à-dire les demi-plaques.

Approche par quantification vectorielle

Une autre approche repose sur la quantification vectorielle. Le principe de la quantification vectorielle est de partitionner un grand nombre de données (vecteurs d'un espace donné) en un nombre restreint de paquets (ou « cluster » selon la terminologie anglo-saxonne) au sens d'une mesure de similarité (généralement une distance). On sépare ainsi l'espace des vecteurs d'indicateurs $\theta$ en K paquets, K étant un paramètre de l'algorithme déterminé à l'avance, chacun comportant un centre ou une moyenne. Chaque vecteur d'indicateurs $\theta$ appartient au cluster dont le centre ou la moyenne est le plus proche.

Ainsi, les ensembles de vecteurs d'indicateurs de colmatage de la base de données sont alors des paquets ayant chacun un centre ou une moyenne, et regroupant sur la base d'une mesure de similarité portant sur les vecteurs d'indicateurs de colmatage, les vecteurs d'indicateurs de colmatage qui sont les plus proches dudit centre ou de ladite moyenne, au sens de la mesure de similarité, un descripteur quantitatif de colmatage étant associé à chacun desdits paquets, et dans lequel, pour un ensemble de un ou plusieurs vecteurs d'indicateurs de colmatage du tube ou de la portion de plaque inspecté :

- on compare chacun des vecteurs d'indicateurs de l'ensemble de vecteurs d'indicateurs de colmatage du tube ou portion de plaque inspecté avec les centres ou moyennes respectifs des paquets de la base de données,
- on sélectionne m paquets de vecteurs d'indicateurs de colmatage sur la base de cette comparaison,
- on détermine le taux de colmatage du tube ou portion de plaque inspecté à partir des descripteurs quantitatifs associés aux m paquets de vecteurs d'indicateurs sélectionnés.

Le partitionnement de l'espace des indicateurs peut être obtenu de diverses manières. On peut le fixer arbitrairement a priori, ou utiliser un algorithme qui donne les paquets, ou clusters, se dégageant le plus naturellement de l'ensemble des vecteurs d'indicateurs de la base de données (tel que l'algorithme dit « K-means »). Une fois ce partitionnement effectué, on détermine pour la demi-plaque à inspecter le nombre de tubes qui la composent appartenant à chaque partition de l'espace des vecteurs d'indicateurs. On aboutit à un vecteur r = (r$_1$, ..., r$_K$) où la composante r$_k$ correspond à la proportion de tubes de la demi-plaque appartenant au cluster k (on a donc $\sum_k r_k$ = 1).

On réalise alors l'estimation directement sur ces vecteurs r, en recherchant par exemple les N demi-plaques de la base de données dont les vecteurs r$_n$ (n ∈ [[ 1, N ]]) sont les plus proches du vecteur de la demi-plaque à estimer au sens d'une mesure de similarité donnée, typiquement une distance. On peut enfin calculer le colmatage moyen par la moyenne des colmatages c$_n$ des demi-plaques sélectionnées pondérées par les distances d$_n$ calculées :

$$c = \frac{\sum_{n=1}^{N} d_n^{-1} c_n}{\sum_{n=1}^{N} d_n^{-1}}$$

Il est à noter que les distributions de vecteurs d'indicateurs de colmatage peuvent être associées à informations spatiales, telles que la position du tubes dans la plaque entretoise, de sorte de correspondre à des images représentatives de la répartition spatiale des valeurs de colmatage. Dans ce cas, le colmatage est estimé au moyen d'un procédé de reconnaissance d'images, qui peut reprendre les principes énoncés plus haut, afin d'estimer le colmatage en reconnaissant, dans la base de données, la ou les images les plus proches de celles obtenues pour l'échangeur thermique inspecté.

### Estimation tubes à tubes

Selon une autre variante, un ensemble de vecteurs d'indicateurs de colmatage est un vecteur d'indicateurs de colmatage d'un tube et le descripteur quantitatif associé audit vecteur est un taux de colmatage dudit tube, ladite base de données portant sur au moins M tubes de différents échangeurs thermiques, M≥2, ladite base de données comportant M vecteurs d'indicateurs du colmatage d'un passage, associés chacun à un taux de colmatage dudit passage dudit tube.

Dans l'exemple ci-après, et comme précédemment, les portions de plaque entretoise sont des demi-plaques entretoises, correspondant à la partie des plaques entretoises présentes dans la branche froide ou chaude de l'échangeur thermique, ici un générateur de vapeur. Pour une intersection tube/plaque donnée, on note c le taux de colmatage obtenu par exemple par examen télévisuel, et θ le vecteur des indicateurs qualitatifs calculés précédemment, après avoir déterminé le vecteur d'indicateurs θ du tube inspecté. On dispose donc de M couples {θ,c} sur la base de données.

#### Approche probabiliste

Conformément à cette approche, après avoir déterminé le vecteur d'indicateurs du tube (S30), on calcule la distribution de taux de colmatage c a posteriori p(c|θ) pour le vecteur d'indicateurs θ, à partir des vecteurs de la base de données (étape S31), et on détermine le colmatage par la somme de la distribution de colmatage a posteriori pondérée par les taux de colmatage (étape S32).

En effet, cette approche dite des moindres carrés a posteriori consiste à minimiser l'erreur quadratique moyenne d'estimation définie par

$$|\hat{\epsilon}| = \sum_{c} (c_{est} - c)^2 p(c\,|\theta)$$

où p(c|θ) désigne la distribution du colmatage c du vecteur d'indicateurs θ (c'est la loi a posteriori). L'estimateur c$_{est}$ du colmatage minimisant l'équation précédente est donné par l'équation :

$$c_{est} = \sum_c c \; p(c|\theta)$$

La loi a posteriori peut être donnée par le théorème de Bayes :

$$p(c|\theta) \propto p(\theta|c) \; p(c)$$

où p(c) désigne la loi a priori et p($\theta$|c) la vraisemblance des indicateurs dans la théorie bayesienne. Le calcul de la loi a posteriori peut ainsi comprendre une estimation de la loi a priori p(c) et de la vraisemblance p($\theta$|c).

Pour exprimer ces deux probabilités, on peut échantillonner l'intervalle des taux de colmatage possibles (de 0 à 100 %) en plusieurs fenêtres consécutives Ck = [ck; ck+1] et calculer p(c) et p($\theta$|c) dans chacune de celles-ci. Ainsi, la loi a priori s'obtient selon un rapport entre :

- le nombre $M_k$ de tubes de la base de données présentant un taux de colmatage c compris dans un intervalle [$c_k$; $C_{k+1}$], et
- le nombre total de tubes dans la base de données :

$$p(c \in C_k) = \frac{N_k}{Card(base\ de\ données)}$$

où $N_k$ représente le nombre de tubes de la base de données présentant un colmatage c compris dans l'intervalle $C_k$, et Card(Base de données) le nombre total de tubes dans la base de données.

La loi de vraisemblance est approchée sur c compris sur un intervalle [$c_k$; $C_{k+1}$] par une loi de probabilité $\mathbb{P}$, de préférence une loi gaussienne, une modélisation de Parzen, ou une moyenne pondérée de lois, fonction de paramètres $\omega$ à déterminer, à l'instar de ce qui a été indiqué plus haut :

$$p\big((\theta)\big|c\big) \approx \mathbb{P}(\theta, \omega)$$

Par exemple, dans le cadre d'une modélisation de Parzen :

$$p(\theta|c \in C_k) = \frac{1}{\sqrt{|\Sigma_n|}(2\pi)^{\frac{d}{2}}h^d} \sum_{j=1}^{N_k} \exp\left(-\frac{1}{2h^2}\big(\theta - \theta_j\big)^T \Sigma_k^{-1}\big(\theta - \theta_j\big)\right)$$

Comme dans le cas de l'estimation par demi-plaque, il convient de fixer la valeur h de la largeur des gaussiennes (par exemple ici encore h = 0,5). Pour parer aux éventuels problèmes de conditionnement de la matrice de variance-covariance des vecteurs d'indicateurs des tubes appartenant à la classe $C_k$, $\Sigma_k$, on peut ici aussi approcher sa matrice inverse par la matrice formée de ses seuls coefficients diagonaux inverses, selon

$$\Sigma_k^{-1} = \big(\sigma_{i,j}\big)^{-1} \approx \begin{pmatrix} \frac{1}{\sigma_{1,1}} & \cdots & 0 \\ \vdots & \ddots & \vdots \\ 0 & \cdots & \frac{1}{\sigma_{d,d}} \end{pmatrix}$$

avec i,j $\in [\![1,d]\!]$.

Ce calcul de la vraisemblance permet de réécrire l'équation de la loi a posteriori et d'obtenir l'expression de la loi de probabilité a posteriori dans l'intervalle Ck :

$$p(c \in C_k|\theta) = \frac{p(\theta|c \in C_k)\, p(c \in C_k)}{\sum_i p(\theta|c \in C_i)\, p(c \in C_i)} = \frac{\mathbb{P}(\theta, \omega_k)\, p(c \in C_k)}{\sum_i \mathbb{P}(\theta, \omega_i)\, p(c \in C_i)}$$

L'estimation $c_{est}$ du colmatage (étape S33) pour le vecteur d'indicateurs θ du tube inspecté se déduit de l'équation précédente :

$$c_{est} = \sum_c c\; p(c|\theta)$$

et est donné par

$$c_{est} = \sum_c \langle c_i \rangle\; p(c \in C_i|\theta)$$

où <$c_i$> symbolise le colmatage moyen des tubes appartenant à l'intervalle Ci.

Approche par quantification vectorielle

L'emploi de techniques de quantification vectorielle a pour but d'évaluer le taux de colmatage d'un tube selon la position de son vecteur d'indicateurs θ dans l'espace des vecteurs d'indicateurs, relativement aux exemples de vecteurs qui constituent la base de données. Schématiquement, le principe est de donner au tube inspecté dont le colmatage est à évaluer un taux de colmatage similaire à ceux des tubes de la base qui sont voisins de son vecteur d'indicateurs θ.

Comme précédemment, les ensembles de vecteurs d'indicateurs de colmatage de la base de données sont des paquets ayant chacun un centre ou une moyenne et regroupant sur la base d'une mesure de similarité portant sur les valeurs desdits indicateurs de colmatage, les indicateurs de colmatage dont les valeurs sont les plus proches dudit centre ou de ladite moyenne, un descripteur quantitatif de colmatage étant associé à chacun desdits paquets.

Plus précisément, on partitionne ainsi l'ensemble des vecteurs d'indicateurs de la base de données en K ensembles, avec par exemple l'algorithme dit « K-means ». Une fois cette étape effectuée, on compare chacun des vecteurs d'indicateurs de l'ensemble d'indicateurs de colmatage avec les centres ou moyennes respectifs des paquets de la base de données, au moyen d'une mesure de similarité, par exemple en calculant les distances $d_k$ du vecteur d'indicateurs θ du tube inspecté à chacun des centres des clusters ($k \in [\![1, K]\!]$). Plusieurs types de distances sont utilisables, de la distance euclidienne usuelle à des mesures de similarité tenant compte de la distribution des données. Parmi ces dernières, on citera la distance de Mahalanobis, qui fait intervenir la matrice de variance-covariance $\sum_k$ de la partition k et son centre $\mu_k$. La distance de Mahalanobis entre un vecteur d'indicateurs θ et l'ensemble des données du cluster k s'écrit alors :

$$d_k = \sqrt{(\theta - \mu_k)^T \textstyle\sum_k^{-1} (\theta - \mu_k)}$$

Il reste alors à estimer la valeur du taux de colmatage du tube selon ces distances calculées. Une solution est de procéder à une moyenne des colmatages moyens <$c_k$> de chaque paquets pondérée à partir des mesures de similarité, par exemple l'inverse des distances telles que les distances $d_k$ calculées précédemment :

$$c_{est} = \frac{\sum_{k=1}^{K} d_k^{-1} \langle c_k \rangle}{\sum_{k=1}^{K} d_k^{-1}}$$

Il est à noter que la moyenne peut être calculée sur la base des taux de colmatages de la totalité des paquets, ou sur une sélection de m d'entre eux sur la base d'une comparaison au sens d'une mesure de similarité, comme précédemment. On considère donc que la sélection des m paquets peut comprendre tous les paquets, les paquets les plus proches, ou tous les paquets à l'exclusion de certains qui sont écartés en raison d'anomalies.

On notera que contrairement à l'approche probabiliste, cette variante d'estimation par quantification vectorielle ne fait pas d'a priori sur l'ensemble de données à disposition. En effet, à aucun moment la loi de probabilité a priori du colmatage, p(c), n'intervient ici. Or, cette dernière peut s'avérer fortement biaisée si certaines plages de valeurs de colmatage sont sur-représentées (ou sous-représentées). Ce procédé est ainsi moins dépendant de la représentativité de la base de données.

**Revendications**

1. Procédé d'évaluation du colmatage de passages d'une plaque entretoise (10) d'un échangeur thermique à tubes (11), lesdits passages (12a, 12b) étant ménagés le long des tubes (11) pour la traversée de la plaque entretoise (10) par un fluide, dans lequel, pour au moins un passage (12a, 12b) :

   - on réalise au voisinage du passage au moins une mesure d'un paramètre dépendant du colmatage ou de la présence de magnétite au moyen d'une sonde à courant de Foucault,
   - on dérive de cette mesure au moins un indicateur de colmatage dudit passage,
   **caractérisé en ce que** le colmatage est évalué en comparant un ensemble de un ou plusieurs vecteurs d'indicateurs de colmatage de dimension au moins deux, construits à partir des indicateurs de colmatage ainsi obtenus avec une pluralité d'ensembles de vecteurs d'indicateurs de colmatage contenus dans une base de données, chacun desdits ensembles de vecteurs d'indicateurs étant associé à un descripteur quantitatif de colmatage.

2. Procédé selon la revendication 1, dans lequel les ensembles de vecteurs d'indicateurs de colmatage sont représentés par des distributions de vecteurs d'indicateurs de colmatage de passages d'une portion de plaque entretoise et le descripteur quantitatif associé à chaque distribution est un taux de colmatage moyen des passages de ladite portion de plaque entretoise, ladite base de données portant sur au moins N portions de plaques entretoises de différents échangeurs thermiques, N≥2, et comportant N distributions de vecteurs d'indicateurs associés chacun à un taux de colmatage moyen des passages de ladite portion de plaque entretoise.

3. Procédé selon la revendication précédente, dans lequel :

   - on détermine la distribution de vecteurs d'indicateurs $P_{test}(\theta)$ de la portion de plaque inspectée,
   - on calcule une mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données,
   - on sélectionne les K distributions de vecteurs d'indicateurs $P_n(\theta)$ de la base de données dont les mesures de similarité $d_n$ d'avec la distribution de vecteurs d'indicateurs $P_{test}(\theta)$ de la portion de plaque entretoise inspectée sont les plus grandes,
   - on détermine le colmatage à partir des taux de colmatage associés auxdites K distributions de vecteurs d'indicateurs $P_n(\theta)$ de la base de données sélectionnées.

4. Procédé selon la revendication 3, dans lequel la détermination du colmatage comprend une étape selon laquelle :

   - on calcule une moyenne des taux de colmatage associés auxdites K distributions de vecteurs d'indicateurs $P_n(\theta)$ de la base de données sélectionnées, chaque taux de colmatage étant pondéré par la mesure de similarité entre la distribution de vecteurs d'indicateur $P_n(\theta)$ de la base de données auquel il est associé et la distribution de vecteurs d'indicateurs $P_{test}(\theta)$ de la portion de plaque entretoise inspectée.

5. Procédé selon l'une des revendications 3 à 4, comprenant en outre une détermination d'une évaluation de l'incertitude sur le colmatage ainsi déterminé, sur la base de la mesure de la similarité entre les K distributions de vecteurs d'indicateurs $P_n(\theta)$ de la base de données ainsi sélectionnées et la distribution vecteurs d'indicateurs $P_{test}(\theta)$ de la portion de plaque entretoise inspectée, et/ou de la variabilité des descripteurs quantitatifs associés aux distributions de vecteurs d'indicateurs de portion de plaque entretoise sélectionnées.

6. Procédé selon l'une des revendications 3 à 5, dans lequel le calcul de la mesure de similarité $d_n$ entre la distribution de vecteurs d'indicateurs $P_{test}(\theta)$ de la portion de plaque entretoise inspectée et chacune des distributions de vecteurs d'indicateurs $P_n(\theta)$ de la base de données comprend une estimation des distributions au moyen d'un modèle de loi de probabilité $\mathbb{P}$, de préférence une loi gaussienne, une modélisation de Parzen ou une moyenne pondérée de lois de probabilité.

7. Procédé selon la revendication 2, dans lequel les distributions de vecteurs d'indicateurs de colmatage sont associées à des informations spatiales, de sorte de correspondre à des images représentatives de la répartition spatiale des valeurs de colmatage.

8. Procédé selon la revendication 1, dans lequel un ensemble de vecteurs d'indicateurs de colmatage est un vecteur d'indicateurs de colmatage d'un tube et le descripteur quantitatif associé audit vecteur est un taux de colmatage dudit tube, ladite base de données portant sur au moins M tubes de différents générateurs de vapeur, M≥2, ladite base de données comportant M vecteurs d'indicateurs du colmatage d'un passage, associés chacun à un taux de colmatage dudit passage.

9. Procédé selon la revendication précédente, dans lequel :

   - on détermine le vecteur d'indicateurs $\theta$ du tube inspecté,
   - on calcule la distribution de taux de colmatage a posteriori $p(c|\theta)$ pour le vecteur d'indicateurs $\theta$, à partir des vecteurs d'indicateurs de la base de données,
   - on détermine le colmatage par la somme de la distribution de colmatage a posteriori $p(c|\theta)$ pondéré par les taux de colmatage c.

10. Procédé selon la revendication précédente, dans lequel le calcul de la loi a posteriori comprend une estimation de la loi a priori $p(c)$ et de la vraisemblance $p(\theta|c)$.

11. Procédé selon la revendication précédente, dans lequel la loi a priori est déterminée par un rapport entre :

   - le nombre $M_k$ de tubes de la base de données présentant un taux de colmatage c compris dans un intervalle $[c_k; C_{k+1}]$, et
   - le nombre total de tubes dans la base de données.

12. Procédé selon l'une des revendications 9 à 10, dans lequel la loi de vraisemblance est approchée sur c compris sur un intervalle $[c_k; C_{k+1}]$ par une loi de probabilité P, de préférence une loi gaussienne, une modélisation de Parzen, ou une moyenne pondérée de lois.

13. Procédé selon la revendication 1, dans lequel les ensembles de vecteurs d'indicateurs de colmatage de la base de données sont des paquets de vecteurs d'indicateurs ayant chacun un centre ou une moyenne et regroupant, sur la base d'une mesure de similarité portant sur lesdits vecteurs d'indicateurs de colmatage, les vecteurs d'indicateurs de colmatage qui sont les plus proches, au sens de la mesure de similarité, dudit centre ou de ladite moyenne, un descripteur quantitatif de colmatage étant associé à chacun desdits paquets, et dans lequel, pour un ensemble de un ou plusieurs vecteurs d'indicateurs de colmatage du tube ou portion de plaque inspecté :

   - on compare chacun des vecteurs d'indicateurs de l'ensemble des vecteurs d'indicateurs de colmatage du tube ou portion de plaque inspecté avec les centres ou moyennes respectifs des paquets de la base de données par une mesure de similarité,
   - on sélectionne m paquets de vecteurs d'indicateurs de colmatage sur la base de cette comparaison,
   - on détermine le taux de colmatage du tube ou portion de plaque inspecté à partir des descripteurs quantitatifs associés aux m paquets de vecteurs d'indicateurs sélectionnés.

14. Procédé selon la revendication 13, dans lequel le taux de colmatage du tube ou portion de plaque inspecté est déterminé à partir d'une moyenne des descripteurs quantitatifs de chaque paquet pondérée à partir des mesures de similarité calculées.

15. Produit programme d'ordinateur comprenant des instructions de code de programme pour l'exécution des étapes du procédé selon les revendications précédentes lorsque ledit programme est exécuté sur un ordinateur.

**Patentansprüche**

1. Verfahren zur Bewertung der Verstopfung von Durchlässen einer Abstandshalterplatte (10) eines Röhrenwärmetauschers (11), wobei die Durchlässe (12a, 12b) entlang der Röhren (11) zur Durchquerung der Abstandshalterplatte (10) durch eine Flüssigkeit angeordnet sind, wobei man für zumindest einen Durchlass (12a, 12b):

   - in der Nähe des Durchlasses zumindest eine Messung eines Parameters, der von der Verstopfung oder dem Vorhandensein von Magnetit abhängig ist, anhand einer Foucault-Stromsonde durchführt,
   - aus dieser Messung zumindest einen Indikator für die Verstopfung des Durchlasses ableitet,
   **dadurch gekennzeichnet, dass** die Verstopfung bewertet wird, indem man einem Satz von einem oder mehreren mindestens zwei dimensionalen Vektoren von Verstopfungsindikatoren, die aus den so erhaltenen Verstopfungsindikatoren aufgebaut werden, mit einer Vielzahl von Vektorensätze von Verstopfungsindikatoren vergleicht, die in einer Datenbank enthalten sind, wobei jede der Einheiten von Indikatorvektoren einem mengenmäßigen Deskriptor für Verstopfung zugeordnet ist.

2. Verfahren nach Anspruch 1, wobei die Vektorensätze von Verstopfungsindikatoren durch Vektorverteilungen von Verstopfungsindikatoren von Durchlässen eines Abstandshalterplattenteils repräsentiert werden und der jeder Verteilung zugeordnete mengenmäßige Deskriptor eine mittlere Verstopfungsquote der Durchlässe des Abstandshalterplattenteils ist, wobei sich die Datenbank über zumindest N Abstandshalterplattenteile verschiedener Wärmetauscher, $N \geq 2$, erstreckt und N Vektorverteilungen von Indikatoren umfasst, die jeweils einer mittleren Verstopfungsquote der Durchlässe des Abstandshalterplattenteils zugeordnet sind.

3. Verfahren nach dem vorstehenden Anspruch, wobei:

   - man die Vektorverteilung von Indikatoren $P_{test}(\theta)$ des inspizierten Plattenteils bestimmt,
   - man eine Ähnlichkeitsmessung $d_n$ zwischen der Vektorverteilung von Indikatoren $P_{test}(\theta)$ des inspizierten Abstandshalterplattenteils und jede der Vektorverteilungen von Indikatoren $P_n(\theta)$ der Datenbank berechnet,
   - man die K Vektorverteilungen von Indikatoren $P_n(\theta)$ der Datenbank auswählt, deren Ähnlichkeitsmessungen $d_n$ mit der Vektorverteilung von Indikatoren $P_{test}(\theta)$ des inspizierten Abstandshalterplattenteils am größten sind,
   - man die Verstopfung ausgehend von den Verstopfungsquoten bestimmt, die den ausgewählten K Vektorverteilungen von Indikatoren $P_n(\theta)$ der Datenbank zugeordnet sind.

4. Verfahren nach Anspruch 3, wobei die Bestimmung der Verstopfung einen Schritt umfasst, bei dem:

   - man einen Mittelwert der Verstopfungsquoten berechnet, die den ausgewählten K Vektorverteilungen von Indikatoren $P_n(\theta)$ der Datenbank zugeordnet sind, wobei jede Verstopfungsquote durch die Ähnlichkeitsmessung zwischen der Vektorverteilung von Indikatoren $P_n(\theta)$ der Datenbank, denen sie zugeordnet ist, und der Vektorverteilung von Indikatoren $P_{test}(\theta)$ des inspizierten Abstandshalterplattenteils gewichtet wird.

5. Verfahren nach einem der Ansprüche 3 bis 4, darüber hinaus eine Bestimmung einer Bewertung der Unsicherheit über die so bestimmte Verstopfung umfassend, auf der Basis der Ähnlichkeitsmessung zwischen den so ausgewählten K Vektorverteilungen von Indikatoren $P_n(\theta)$ der Datenbank und der Vektorverteilung von Indikatoren $P_{test}(\theta)$ des inspizierten Abstandshalterplattenteils, und/oder der Variabilität der mengenmäßigen Deskriptoren, die den ausgewählten Vektorverteilungen von Indikatoren eines Abstandshalterplattenteils zugeordnet sind.

6. Verfahren nach einem der Ansprüche 3 bis 5, wobei die Berechnung der Ähnlichkeitsmessung $d_n$ zwischen der Vektorverteilung von Indikatoren $P_{test}(\theta)$ des inspizierten Abstandshalterplattenteils und jeder der Vektorverteilungen von Indikatoren $P_n(\theta)$ der Datenbank eine Einschätzung der Verteilungen anhand eines Wahrscheinlichkeitsgesetzmodells $\mathbb{P}$, vorzugsweise eines Gauß'schen Gesetzes, einer Parzen-Modellierung oder eines gewichteten Mittelwerts von Wahrscheinlichkeitsgesetzen umfasst.

7. Verfahren nach Anspruch 2, wobei die Vektorverteilungen von Verstopfungsindikatoren räumlichen Informationen zugeordnet sind, um repräsentativen Abbildungen der räumlichen Verteilung der Verstopfungswerte zu entsprechen.

8. Verfahren nach Anspruch 1, wobei ein Vektorsatz von Verstopfungsindikatoren ein Vektor von Verstopfungsindikatoren einer Röhre ist und der mengenmäßige Deskriptor, der dem Vektor zugeordnet ist, eine Verstopfungsquote der Röhre ist, wobei sich die Datenbank über mindestens M Röhren verschiedener Dampfgeneratoren, M≥2, erstreckt, wobei die Datenbank M Vektoren von Verstopfungsindikatoren eines Durchlasses umfasst, die jeweils einer Verstopfungsquote des Durchlasses zugeordnet sind.

9.  Verfahren nach dem vorstehenden Anspruch, wobei:

    - man den Vektor von Indikatoren θ der inspizierten Röhre bestimmt,
    - man die a posteriori Verteilung einer Verstopfungsquote p(c|θ) für den Vektor von Indikatoren θ ausgehend von den Vektoren von Indikatoren der Datenbank berechnet,
    - man die Verstopfung durch die Summe der a posteriori Verstopfungsverteilung p(c|θ) gewichtet durch die Verstopfungsquoten c bestimmt.

10. Verfahren nach dem vorstehenden Anspruch, wobei die Berechnung des a posteriori Gesetzes eine Einschätzung des a priori Gesetzes p(c) und der Plausibilität p(θ|c) umfasst.

11. Verfahren nach dem vorstehenden Anspruch, wobei das a priori Gesetz bestimmt wird durch ein Verhältnis zwischen:

    - der Anzahl $M_k$ an Röhren der Datenbank, die eine Verstopfungsquote c aufweist, die in einem Intervall [$c_k$; $C_{k+1}$] enthalten ist, und
    - der Gesamtzahl an Röhren in der Datenbank.

12. Verfahren nach einem der Ansprüche 9 bis 10, wobei das Plausibilitätsgesetz durch ein Wahrscheinlichkeitsgesetz

    $\mathbb{P}$, vorzugsweise ein Gauß'sches Gesetz, eine Parzen-Modellierung oder einen gewichteten Mittelwert von Gesetzen c angenähert wird, das in einem Intervall [$c_k$; $C_{k+1}$] enthalten ist.

13. Verfahren nach Anspruch 1, wobei die Vektorensätze von Verstopfungsindikatoren der Datenbank Vektorenpakete von Indikatoren sind, die jeweils eine Mitte oder einen Mittelwert aufweisen, und auf der Basis einer Ähnlichkeitsmessung, die sich über die Vektoren von Verstopfungsindikatoren erstreckt, die Vektoren von Verstopfungsindikatoren zusammenfassen, die im Sinne der Ähnlichkeitsmessung am nächsten an der Mitte oder des Mittelwerts gelegen sind, wobei ein mengenmäßiger Verstopfungsdeskriptor einem jeden der Pakete zugeordnet wird, und wobei man, für ein Satz von einem oder mehreren Vektoren von Verstopfungsindikatoren der Röhre oder des inspizierten Plattenteils:

    - jeden der Vektoren von Indikatoren dem Satz der Vektoren von Verstopfungsindikatoren der Röhre oder des inspizierten Plattenteils mit den jeweiligen Mitten oder Mittelwerten der Pakete der Datenbank durch eine Ähnlichkeitsmessung vergleicht,
    - m Pakete von Vektoren von Verstopfungsindikatoren auf der Basis dieses Vergleichs auswählt,
    - die Verstopfungsquote der Röhre oder des inspizierten Plattenteils ausgehend von den mengenmäßigen Deskriptoren bestimmt, die den ausgewählten m Paketen von Vektoren von Indikatoren zugeordnet sind.

14. Verfahren nach Anspruch 13, wobei die Verstopfungsquote der Röhre oder des inspizierten Plattenteils ausgehend von einem Mittelwert der mengenmäßigen Deskriptoren eines jeden Pakets bestimmt wird, der ausgehend von den berechneten Ähnlichkeitsmessungen gewichtet wird.

15. Computerprogrammprodukt, Programmcodebefehle zur Ausführung der Schritte des Verfahrens nach den vorstehenden Ansprüchen umfassend, wenn das Programm auf einem Computer ausgeführt wird.

**Claims**

1.  A method for evaluating the fouling of passages of a spacer plate (10) of a heat exchanger with tubes (11), said passages (12a, 12b) being made along the tubes (11) for crossing the spacer plate (10) by a fluid, wherein, for at least one passage (12a, 12b):

    - at least one measurement of a parameter depending on the fouling or on the presence of magnetite is conducted in the vicinity of the passage by means of an eddy current probe,
    - at least one fouling indicator of said passage is derived from this measurement,

**characterized in that** the fouling is evaluated by comparing a set of one or several vectors of fouling indicators with a dimension of at least two, built from the thereby obtained fouling indicators, with a plurality of sets of vectors of fouling indicators contained in a database, each of said sets of vectors of indicators being associated with a quantitative fouling descriptor.

2. The method according to claim 1, wherein the sets of vectors of fouling indicators are represented by distributions of vectors of fouling indicators of passages of a spacer plate portion and the quantitative descriptor associated with each distribution is an average fouling level of the passages of said spacer plate portion, said database dealing with at least N portions of spacer plates of different heat exchangers, $N \geq 2$, and including N distributions of vectors of indicators each associated with an average fouling level of the passages of said spacer plate portion.

3. The method according to the preceding claim, wherein:

 - the distribution of vectors of indicators $P_{test}(\theta)$ of the inspected plate portion is determined,
 - a similarity measurement $d_n$ between the distribution of vectors of indicators $P_{test}(\theta)$ of the inspected spacer plate portion and each of the distributions of vectors of indicators $P_n(\theta)$ of the database is calculated,
 - the K distributions of vectors of indicators $P_n(\theta)$ of the database are selected, for which the measurements $d_n$ of similarity with the distribution of vectors of indicators $P_{test}(\theta)$ of the inspected spacer plate portion are the greatest,
 - the fouling is determined from fouling levels associated with said selected K distributions of vectors of indicators $P_n(\theta)$ of the database.

4. The method according to claim 3, wherein the determination of the fouling comprises a step according to which:

 - an average of the fouling levels associated with said selected K distributions of vectors of indicators $P_n(\theta)$ of the database is calculated, each fouling level being weighted by the similarity measurements between the distribution of vectors of indicators $P_n(\theta)$ of the database with which it is associated and the distribution of vectors of indicators $P_{test}(\theta)$ of the inspected spacer plate portion.

5. The method according to one of claims 3 to 4, further comprising a determination of an evaluation of the uncertainty on the thereby determined fouling, on the basis of the measurement of the similarity between the thereby selected K distributions of vectors of indicators $P_n(\theta)$ of the database and the distribution of vectors of indicators $P_{test}(\theta)$ of the inspected spacer plate portion and/or of the variability of the quantitative descriptors associated with the selected distributions of vectors of indicators of a spacer plate portion.

6. The method according to one of claims 3 to 5, wherein the calculation of the similarity measurement $d_n$ between the distribution of vectors of indicators $P_{test}(\theta)$ of the inspected spacer plate portion and each of the distributions of vectors of indicators $P_n(\theta)$ of the database comprises an estimation of the distributions by means of a probability law model $\mathbb{P}$, preferably a Gaussian law, a Parzen modeling or a weighted average of probability laws.

7. The method according to claim 2, wherein the distributions of vectors of fouling indicators are associated with spatial information, so as to correspond to images representing the spatial distribution of the fouling values.

8. The method according to claim 1, wherein a set of vectors of fouling indicators is a vector of indicators of fouling of a tube and the quantitative descriptor associated with said vector is a fouling level of said tube, said database dealing with at least M tubes of different steam generators, $M \geq 2$, said database including M vectors of indicators of fouling of a passage, each associated with a fouling level of said passage.

9. The method according to the preceding claim, wherein:

 - the vectors of indicators $\theta$ of the inspected tube is determined,
 - the a posteriori fouling level distribution $p(c|\theta)$ is calculated for the vectors of indicators $\theta$, from vectors of indicators of the database,
 - the fouling is determined by the sum of the a posteriori fouling distribution $p(c|\theta)$ weighted by the fouling levels c.

10. The method according to the preceding claim, wherein the calculation of the a posteriori law comprises an estimation of the a priori law p(c) and of the likelihood p($\theta$|c).

11. The method according to the preceding claim, wherein the a priori law is determined by a ratio between:

   - the number $M_k$ of tubes of the database having a fouling level c comprised in an interval $[c_k; C_{k+1}]$, and
   - the total number of tubes in the database.

12. The method according to one of claims 9 to 10, wherein the likelihood law is approached on c comprised in an interval $[c_k; C_{k+1}]$ by a probability law P, preferably a Gaussian law, a Parzen modeling, or a weighted average of laws.

13. The method according to claim 1, wherein the set of vectors of fouling indicators of the database are packets of vectors of indicators each having a center or an average and grouping, on the basis of a similarity measurement dealing with said vectors of fouling indicators, the vectors of fouling indicators which are the closest, in the sense of the similarity measurement, to said center or to said average, a quantitative fouling descriptor being associated with each of said packets, and wherein, for a set of one or several vectors of fouling indicators of the inspected tube or plate portion:

   - each of the vectors of indicators in the set of vectors of indicators of fouling of the inspected tube or plate portion is compared with the respective centers or averages of the packets of the database by a similarity measurement,
   - m packets of vectors of fouling indicators are selected on the basis of this comparison,
   - the fouling level of the inspected tube or plate portion is determined from quantitative descriptors associated with the m packets of selected vectors of indicators.

14. The method according to claim 13, wherein the fouling level of the inspected tube or plate portion is determined from an average of the quantitative descriptors of each packet weighted from the calculated similarity measurements.

15. A computer program product comprising program code instructions for executing the steps of the method according to the preceding claims when said program is executed on a computer.

## FIG 1

## FIG 2

Détermination de la distribution d'indicateurs — S20

Calcul de la similarité — S21

Sélection des K distributions d'indicateurs de la base de données — S22

Détermination du colmatage — S23

## FIG 3

S30

| Détermination du vecteur d'indicateur du tube |
|:---:|

S31

| Calcul de p(c\|θ) |
|:---:|

S32

| Somme des p(c\|θ) |
|:---:|

S33

| Estimation du colmatage |
|:---:|

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2474826 A1

- EP 2584254 A2

**Littérature non-brevet citée dans la description**

- **L. CHÂTELIER et al.** Tube Support Plate Blockage Evaluation with Televisual Examination and Eddy Current Analysis. *AIP Conference proceedings,* 25 Juillet 2008, vol. 1096, 766, , 773